(19) Europäisches Patentamt / European Patent Office / Office européen des brevets

(11) **EP 4 611 267 A1**

(12) **EUROPEAN PATENT APPLICATION**

(43) Date of publication:
**03.09.2025 Bulletin 2025/36**

(21) Application number: **25160649.7**

(22) Date of filing: **27.02.2025**

(51) International Patent Classification (IPC):
**H04B 1/04** (2006.01)   **H01Q 3/26** (2006.01)
**H04B 1/18** (2006.01)   **H04B 7/06** (2006.01)
**H04B 7/08** (2006.01)

(52) Cooperative Patent Classification (CPC):
**H04B 1/0458; H01Q 3/26; H04B 1/0483;
H04B 1/18; H04B 7/0617; H04B 7/086**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2024 CN 202410223374**

(71) Applicant: **Chiun Mai Communication Systems,
Inc.
New Taipei City 236 (TW)**

(72) Inventors:
  • **YI, CHEN-HUNG**
    **236 New Taipei (TW)**
  • **KAO, CHE-CHENG**
    **236 New Taipei (TW)**

• **CHANG, CHIA-YUNG**
  **236 New Taipei City (TW)**
• **CHANG, LUNG-TA**
  **236 New Taipei (TW)**
• **CHEN, CHIA-HSIEN**
  **236 New Taipei (TW)**
• **TAI, SHAO-YI**
  **236 New Taipei (TW)**
• **KAO, PING-CHI**
  **236 New Taipei (TW)**
• **HUANG, PENG-HAO**
  **236 New Taipei (TW)**
• **CHANG, TSUNG-BIN**
  **236 New Taipei (TW)**

(74) Representative: **Metida
Gyneju str. 16
01109 Vilnius (LT)**

(54) **BEAMFORMING MODULE CONTROL SYSTEM AND WIRELESS COMMUNICATION DEVICE**

(57)    A beamforming module control system and a wireless communication device are provided, the beamforming module control system includes a plurality of beamforming modules respectively connected to an array antenna and configured to transmit signals to the array antenna, and a plurality of control modules respectively connected to the plurality of beamforming modules and configured to process signals of the plurality of beamforming modules connected thereto; the plurality of beamforming modules are arranged to form a plurality of beamforming module zones, each of the plurality of control modules is connected to one of the plurality of beamforming module zones, the plurality of control modules are connected to each other.

FIG. 1

EP 4 611 267 A1

## Description

FIELD

The subject matter herein generally relates to antenna technology field, and more particularly to a beamforming module control system and a wireless communication device.

BACKGROUND

Low-orbit satellite system (LEO) is a large satellite system composed of multiple satellites that can process real-time information. Low-orbit satellites are also used for communications in mobile terminals such as mobile phones. Due to the low orbit altitude, the mobile terminals using the low-orbit satellite communications have the advantages of short transmission delay and small path loss. A mobile communication system consisting of multiple low-orbit satellites can achieve true global coverage and more efficient frequency reuse. Cellular communication, multiple access, spot beam, frequency reuse and other technologies also provide technical support for the application of low-orbit satellites in mobile communications. In short, low-orbit satellites are currently highly regarded as mobile communication systems.

However, in order to reduce an overall area of the antenna design, the existing array antenna modules used in low-orbit satellites are large, and the signal transmission wiring between antennas is difficult. Usually, a single control module is used to connect and control the entire array antenna module through wiring. However, the amount of data processed by the entire array antenna is huge, and the speed of signal processing and transmission by a single control module and its wiring is greatly affected, so that the design of the array antenna module requires more consideration.

SUMMARY OF THE INVENTION

The application provides a beamforming module control system and a array antenna.

A beamforming module control system provided by the present application applied in an array antenna, the beamforming module control system includes a plurality of beamforming modules respectively connected to the array antenna and configured to transmit signals to the array antenna, the plurality of beamforming modules arranged to form a plurality of beamforming module zones; and a plurality of control modules respectively connected to the plurality of beamforming modules and configured to process signals of the plurality of beamforming modules connected thereto, each of the plurality of control modules connected to one of the plurality of beamforming module zones, each of the plurality of control modules connected to each other.

Further, the plurality of beamforming modules include a plurality of transmitting beamforming modules and a plurality of receiving beamforming modules, each of the plurality of beamforming module zones includes at least one of the plurality of transmitting beamforming modules and at least one of the plurality of receiving beamforming modules, each of the plurality of control modules is configured to process the signals of the at least one of the plurality of transmitting beamforming modules and at least one of the plurality of receiving beamforming modules in the beamforming module zone connected thereto.

Further, a quantity of the beamforming modules included in each of the plurality of beamforming module zones is equal, quantities of the transmitting beamforming modules and the receiving beamforming modules included in each of the plurality of beamforming module zones are equal.

Further, the beamforming module control system further includes a plurality of buffers, the plurality of buffers include a plurality of first buffers and a plurality of second buffers, each of the plurality of control modules is connected to two rows of the beamforming modules of each of the plurality of beamforming module zones through two of the first buffers and one of the second buffers.

Further, the plurality of buffers include a plurality of transmitting buffers and a plurality of receiving buffers, each of the plurality of beamforming modules is connected to the array antenna through the plurality of transmitting buffers and the plurality of receiving buffers.

Further, the beamforming module control system further includes a plurality of multiplexers, the plurality of multiplexers are connected to the plurality of beamforming modules and configured to transmit the signals of the plurality of beamforming modules, each of the plurality of multiplexers is a multilayer structure.

Further, the plurality of control modules obtain a beamforming angle provided by a user terminal and simultaneously process data reading and writing to the plurality of transmitting beamforming modules and the plurality of receiving beamforming module connected thereto, the plurality of transmitting beamforming modules and the plurality of receiving beamforming module form beamforming signals accordingly.

Further, the beamforming module control system further includes a plurality of serial peripheral interfaces (SPIs) and a quad serial peripheral interface (QSPI), the plurality of control modules, the plurality of buffers, and the plurality of beamforming modules are connected through the plurality of SPIs, the control modules are connected to each other through the QSPI.

A wireless communication device provided by the present application includes an array antenna and the beamforming module control system.

Further, the array antenna includes a plurality of antennas arranged in rows, in each row, every two adjacent antennas are spaced apart by a predetermined distance, every two adjacent rows of antennas are staggered to form an array arrangement.

Further, each of the plurality of transmitting beamforming modules is connected to one or more of the plurality of antennas, each of the plurality of receiving beamforming modules is connected to one or more of the plurality of antennas.

Further, the wireless communication device further includes a circuit board, the array antenna and the beamforming module control system are arranged on the circuit board.

Further, the array antenna and the plurality of multiplexers are arranged on different layers of the circuit board.

BRIEF DESCRIPTION OF THE DRAWINGS

Implementations of the present disclosure will now be described, by way of embodiments, with reference to the attached figures.

FIG. 1 is a functional block diagram of an antenna array and a beamforming module control system according to an embodiment of the present application.

FIG. 2 is another functional block diagram of the antenna array and the beamforming module control system according to an embodiment of the present application.

FIG. 3 is a structural diagram of the antenna array and the beamforming module control system according to an embodiment of the present application.

FIG. 4 is a framework flow chart diagram of the antenna array and the beamforming module control system according to an embodiment of the present application.

FIG. 5 is a structural diagram of a multiplexer of the array antenna module according to an embodiment of the present application.

FIG. 6 is a cross-sectional view of the antenna array and the beamforming module control system according to an embodiment of the present application.

FIG. 7 is a structural diagram of the antenna array and the beamforming module control system according to another embodiment of the present application.

FIG. 8 is an enlarged schematic diagram of the V region of the antenna array and the beamforming module control system shown in FIG. 7.

FIG. 9 is an S-parameter curve diagram of the multiplexer according to an embodiment of the present application.

FIG. 10 is an S-parameter curve diagram of the multiplexer according to another embodiment of the present application.

FIG. 11 is a structural diagram of the multiplexer according to some other embodiments of the present application.

FIG. 12 is a structural diagram of the multiplexer according to some other embodiments of the present application.

FIG. 13 is a cross-sectional view of the antenna array and the beamforming module control system according to an embodiment of the present application.

FIG. 14 is a structural diagram of the antenna array and the beamforming module control system according to an embodiment of the present application.

FIG. 15 is another structural diagram of the antenna array and the beamforming module control system according to an embodiment of the present application.

FIG. 16 is a diagram of actual data of the antenna array and the beamforming module control system according to an embodiment of the present application.

DETAILED DESCRIPTION

It will be appreciated that for simplicity and clarity of illustration, where appropriate, reference numerals have been repeated among the different figures to indicate corresponding or analogous elements. Additionally, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The description is not to be considered as limiting the scope of the embodiments described herein.

Several definitions that apply throughout this disclosure will now be presented.

The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape, or another word that "substantially" modifies, such that the component need not be exact. For example, "substantially cylindrical" means that the object resembles a cylinder, but can have one or more deviations from a true cylinder. The term "comprising" means "including, but not necessarily limited to"; it specifically indicates open-ended inclusion or membership in a so-described combination, group, series, and the like.

Low-orbit satellite system (LEO) is a large satellite system composed of multiple satellites that can process real-time information. Low-orbit satellites are also used for communications in mobile terminals such as mobile phones. Due to the low orbit altitude, the mobile terminals using the low-orbit satellite communications have the advantages of short transmission delay and small path loss. A mobile communication system consisting of multiple low-orbit satellites can achieve true global coverage and more efficient frequency reuse. Cellular communication, multiple access, spot beam, frequency reuse and other technologies also provide technical support for the application of low-orbit satellites in mobile communications. In short, low-orbit satellites are currently highly regarded as mobile communication systems.

However, in order to reduce an overall area of the antenna design, the existing array antenna modules used in low-orbit satellites are large, and the signal transmission wiring between antennas is difficult. Usually, a single control module is used to connect and control the entire array antenna module through wiring. However, the amount of data processed by the entire array antenna is huge, and the speed of signal processing and transmission by a single control module and its wiring is greatly affected, so that the design of the array antenna module requires more consideration.

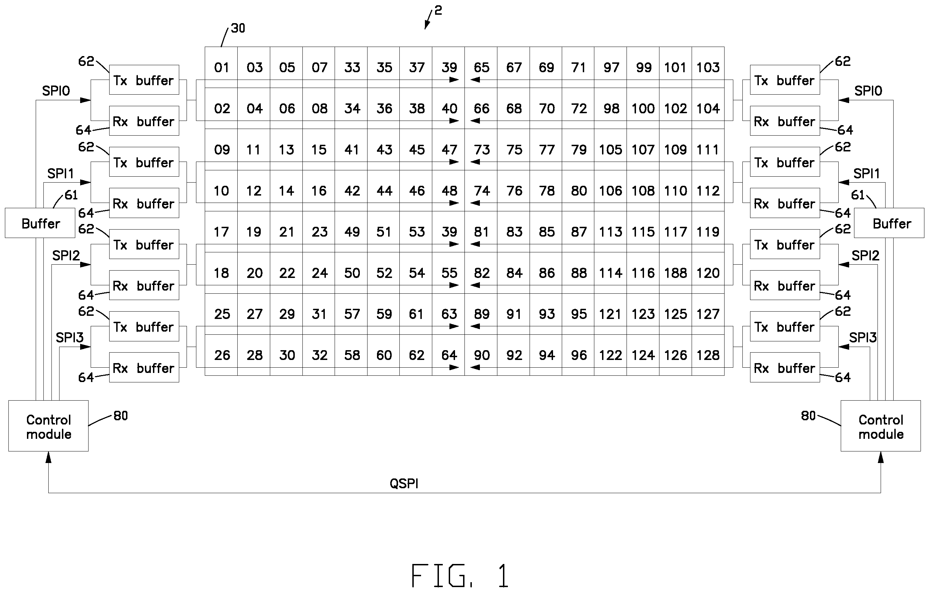

Referring to FIG. 1, FIG. 1 illustrates a functional block diagram of a beamforming module control system 2 according to an embodiment of the present application. The beamforming module control system 2 can be applied in a wireless communication device (not shown) for realizing wireless communication of the wireless communication device based on low-orbit satellites. The wireless communication device may includes an array antenna module 1 and the beamforming module control system 2. The array antenna module 1 includes an array antenna 10. The array antenna 10 can be configured to transmit or receive wireless communication signals for realizing wireless communication. The beamforming module control system 2 is connected to the array antenna 10 and configured to process the wireless communication signals of the array antenna 10.

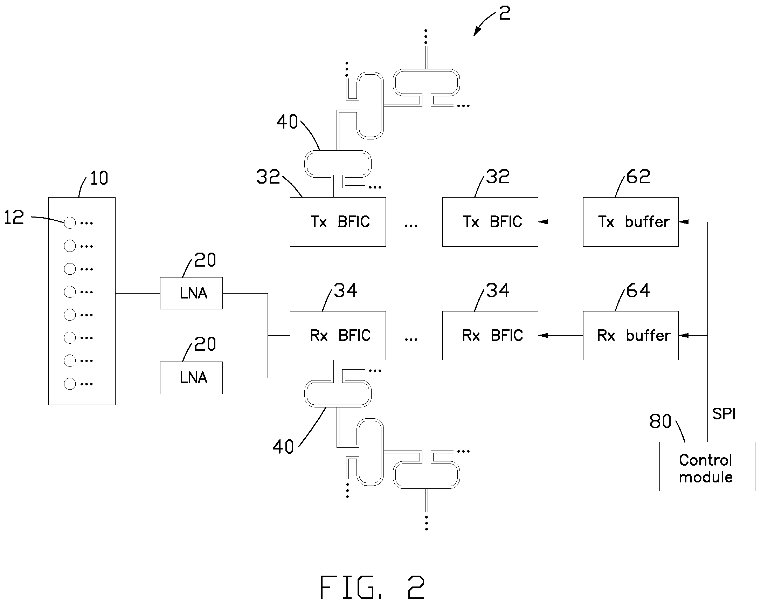

Referring to FIG. 2, the array antenna 10 includes a plurality of antennas 12 arranged in array. The plurality of antennas 12 may means one or more/several antennas.

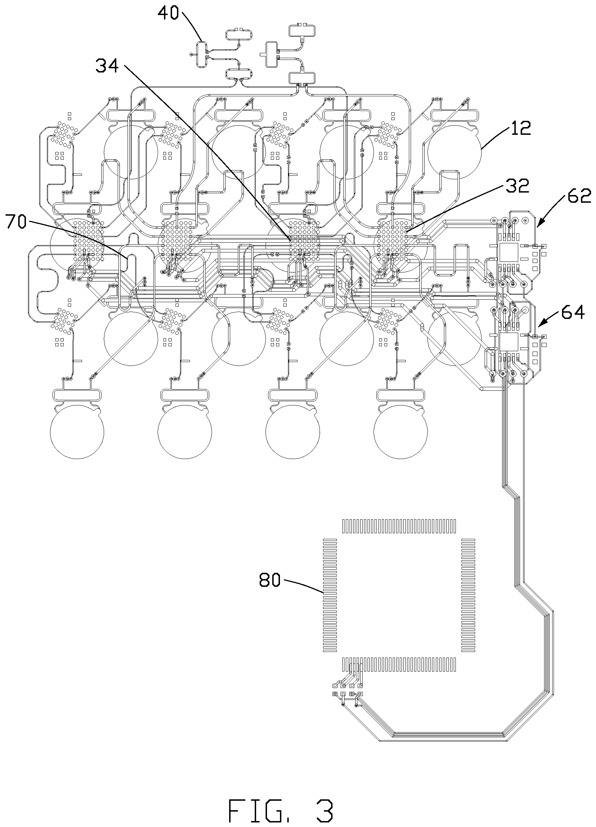

Referring to FIGS. 2 and 3, in some embodiments, the plurality of antennas 12 are arranged in rows. In each row, every two adjacent antennas 12 are spaced apart by a predetermined distance. Every two adjacent rows of antennas 12 are staggered to form an array arrangement, that is, the array antenna 10. For instance, in an N+1th row, each antenna 12 is staggered between two adjacent antennas 12 in a Nth row, where N is a positive integer greater than or equal to 1.

The beamforming module control system 2 includes a plurality of beamforming modules 30, a plurality of buffers 61, a plurality of serial peripheral interfaces (SPIs) 70, and a plurality of control modules 80.

Referring to FIGS. 1 and 2, the plurality of beamforming modules 30 can be arranged in an array. Each beamforming module 30 can be connected to several antennas 12 of the array antenna 10 for forming beamforming module signals, and further transmitting and receiving radio beams with specific pointing angles (or beamforming angles) through the several antennas 12 connected. In some embodiments, the plurality of beamforming modules 30 can include a plurality of transmitting beamforming modules 32 and a plurality of receiving beamforming modules 34. In some embodiments, the beamforming module 30 can be beamforming integrated circuit (BFIC), the transmitting beamforming module 32 can be transmitting beamforming integrated circuit (Tx BFIC), the receiving beamforming module 34 can be receiving beamforming integrated circuit (Rx BFIC).

In some embodiments, each transmitting beamforming module 32 can be connected to the several antennas 12 of the array antenna 10 for forming the beamforming signals and further transmitting radio beams with specific pointing angles (or beamforming angles) through the several antennas 12 connected. Each receiving beamforming module 34 can be connected to the several antennas 12 of the array antenna 10 for forming the beamforming signals and further receiving radio beams with specific pointing angles (or beamforming angles) through the several antennas 12 connected, and then forming the beaming signals. It should be known that the transmitting beamforming module 32 and the receiving beamforming module 34 can be paired to form a group of beamforming module 30 and connected to same several antennas 12. For instance, each transmitting beamforming module 32 and the corresponding receiving beamforming module 34 can be connected to eight antennas 12. It should be known that each beamforming module 30 can be or include a group of transmitting beamforming module 32 and receiving beamforming module 34. In the embodiment shown in FIG. 2, only one of the transmitting beamforming modules 32 is shown connected to the array antenna 10 via a connecting wire, it can be understood that each transmitting beamforming module 32 can be connected to the eight antennas 12 of the array antenna 10 via eight connecting wires. Similarly, in FIG. 2, only one of the receiving beamforming modules 34 is shown connected to the array antenna 10 via a connecting wire, it can be understood that each receiving beamforming module 34 can be connected to the eight antennas 12 of the array antenna 10 via eight connecting wires.

The beamforming module control system 2 further includes a plurality of low noise amplifiers (LNAs) 20. Each receiving beamforming module 34 can be connected to the several antennas 12 through a plurality of LNAs 20, the LNAs 20 are configured to receive radio beams from the several antennas 12 and output the radio beams to the receiving beamforming module 34 after amplified, the receiving beamforming module 34 is configured to receive the radio beams from the several antennas 12 through the LNAs 20, and analyze the radio beams to form the beaming signals. For instance, each receiving beamforming module 34 can be connected to eight antennas 12 through four LNAs 20, that is one receiving beamforming module 34 can be connected to two antennas 12 through one LNA 20.

In some embodiments, the array formed by the plurality of beamforming modules 30 can be divided into several beamforming module zones, each beamforming module zone is formed by a predetermined quantity of beamforming modules 30, the quantity of the beamforming modules 30 in every beamforming module zone is the same. For instance, the plurality of beamforming modules 30 shown in FIG. 1 can be divided into two beamforming module zones, each beamforming module zone is formed by sixty-four beamforming modules 30. In some other embodiments, the plurality of beamforming modules 30 can be divided into two, three, four, or more beamforming module zones according to design and actual demand, which is not limited here. In some embodiments, the several beamforming module zones formed by the plurality of beamforming modules 30 can be determined by arrangement positions of the several antennas 12 in the array antenna 10, that is the several antennas 12 in neighboring or surrounding arrangement are connected to the transmitting beamforming module 32 and the corresponding receiving beamforming module 34, the plurality of transmitting beamforming module 32 and the corresponding plurality of receiving beamforming module 34 form a beamforming module zone. In some embodiment, each beamforming module zone include at least one transmitting beamforming module 32 and at least one receiving beamforming module 34, each control module 80 is configured to process the signals and data of the at least one transmitting beamforming module 32 and the at least one receiving beamforming module 34 in the beamforming module zone connected. In some embodiment, the quantity of the beamforming modules 30 included in each beamforming module zone is the same, such as each beamforming module zone includes sixty-four beamforming modules 30. In some embodiment, the quantity of the transmitting beamforming modules 32 and the receiving beamforming modules 34 included in each beamforming module zone are the same, such as each beamforming module zone includes sixty-four transmitting beamforming modules 32 and sixty-four receiving beamforming modules 34.

The plurality of buffers 61 are respectively connected to the plurality of beamforming modules 30 and configured to enhance a completeness of the signals of the plurality of beamforming modules 30 for being invoked by the control modules 80. In some embodiments, the plurality of buffers 61 include a plurality of transmitting buffers (Tx buffers) 62 and a plurality of receiving buffers (Rx buffers) 64. Each transmitting buffer 62 can be connected to several transmitting beamforming modules 32 for enhancing a completeness of the signals of the several transmitting beamforming modules 32. Each receiving buffer 64 can be connected to several receiving beamforming modules 34 for enhancing a completeness of the signals of the several receiving beamforming modules 34. For instance, each transmitting buffer 62 can be connected to sixteen transmitting beamforming modules 32, each receiving buffer 64 can be connected to sixteen receiving beamforming modules 34. Each buffer 61 can be a group of transmitting buffer 62 and receiving buffer 64.

The plurality of control modules 80 can be respectively connected to the plurality of beamforming modules 30, each control module 80 can be connected to one beamforming module zone, and the plurality of control modules 80 can be connected to each other. The plurality of control modules 80 can be respectively connected to the plurality of beamforming modules 30 through the plurality of buffers 61 for controlling the plurality of beamforming modules 30 and processing the signals and data of the plurality of beamforming modules 30, such as controlling a reading and writing of the data of the plurality of beamforming modules 30, and controlling a switching and adjusting of the specific pointing angles (or the beamforming angles) of the beamforming signals. In some embodiments, the plurality of beamforming modules 30 can be divided into two beamforming module zones as shown in FIG. 1, each control module 80 can be connected to one beamforming module zone. In some embodiments, each control module 80 can be connected to several buffers 61, and further connected to several beamforming modules 30 through the several buffers 61. For instance, each control module 80 can be connected to four buffers 61 (or four groups of transmitting buffers 62 and receiving buffers 64). In some embodiments, the control module 80 can be but is not limited to a Micro controller unit (MCU).

In some embodiments, connections among the plurality of control modules 80, the plurality of buffers 61, and the plurality of beamforming modules 30 can use the plurality of SPIs 70. Connections and communications among the plurality of control modules 80 can use quad serial peripheral interfaces (QSPIs). In some embodiments, each control module 80 can be connected to two rows of beamforming modules 30 of the beamforming module zone through at least one SPI 70 and two buffers (such as transmitting buffers 62 and receiving buffers 64). Referring to FIG. 2, for instance, one SPI 70 line can include one control module 80, one group of transmitting buffer 62 and receiving buffer 64 (that is one transmitting buffer 62 and one receiving buffer 64), sixteen groups of transmitting beamforming modules 32 and receiving beamforming modules 34 (that is sixteen transmitting beamforming modules 32 and sixteen receiving beamforming modules 34), and one hundred and twenty-eight antennas 12 (that is each group of transmitting beamforming module 32 and receiving beamforming module 34 is connected to eight antennas 12). Referring to FIG. 2, for instance, each control module 80 is respectively connected to several antennas 12 in the array antenna 10 through several transmitting buffers 62 and several receiving buffers 64.

In some embodiments, taking a 32*32 antenna array as an example, the antenna array 10 includes one thousand and twenty-four antennas 12, every eight antennas 12 are connected to one beamforming module 30 (or one group of transmitting beamforming module 32 and receiving beamforming module 34), every sixteen beamforming modules 30 (or sixteen groups of transmitting beamforming module 32 and receiving beamforming module 34) are connected to one buffer 61 (or one group of transmitting buffer 62 and receiving buffer 64), every four buffers 61 (or four groups of transmitting buffer 62 and receiving buffer 64) are connected to one control module 80. Then in the 32*32 antenna array, including one thousand and twenty-four antennas 12, one hundred and twenty-eight beamforming modules 30 (or one hundred and twenty-eight groups of transmitting beamforming module 32 and receiving beamforming module 34), eight buffers (or eight groups of transmitting buffer 62 and receiving buffer 64), and two control modules 80. That is, each control module 80 can be correspondingly connected to sixty-four beamforming modules 30 (or sixty-four groups of transmitting beamforming module 32 and receiving beamforming module 34). One hundred and twenty-eight beamforming modules 30 (or one hundred and twenty-eight groups of transmitting beamforming module 32 and receiving beamforming module 34) are corresponding to one thousand and twenty-four antennas 12 and in array arrangement.

In some embodiments, there can be more buffers 61 connected between the control module 80 and the buffers 61 (or the transmitting buffer 62 and the receiving buffer 64). For instance, referring to FIG. 1, there can be more buffers 61 connected between the control module 80 and the two buffers 61 (or the two groups of transmitting buffer 62 and receiving buffer 64, such as the transmitting buffers 62 and the receiving buffers 64 of the SPI0 and SPI1 lines), the buffers 61 (or the transmitting buffers 62 and the receiving buffers 64) connected to beamforming modules 30 can be defined as first buffers; the buffers 61 connected between the control modules 80 and the first buffers can be defined as second buffers, so as to form buffers with multiple levels connection. The buffers 61 (or the transmitting buffers 62 and the receiving buffers 64) can be used to enhance the quality of SPI line signals. Since the circuit board on which the array antenna 10 is arranged is usually large in area and an impedance load of the SPI line wiring is large, by providing buffers 61 (or the transmitting buffers 62 and the receiving buffers 64), the completeness of the SPI line signals can be enhanced to ensure accurate reading and writing of data on the SPI lines. In some embodiments, for instance, referring to FIG. 1, each control module 80 can be connected to two rows of beamforming modules 30 of the beamforming module zone through two first buffers (the transmitting buffers 62 and the receiving buffers 64) and one second buffer 61.

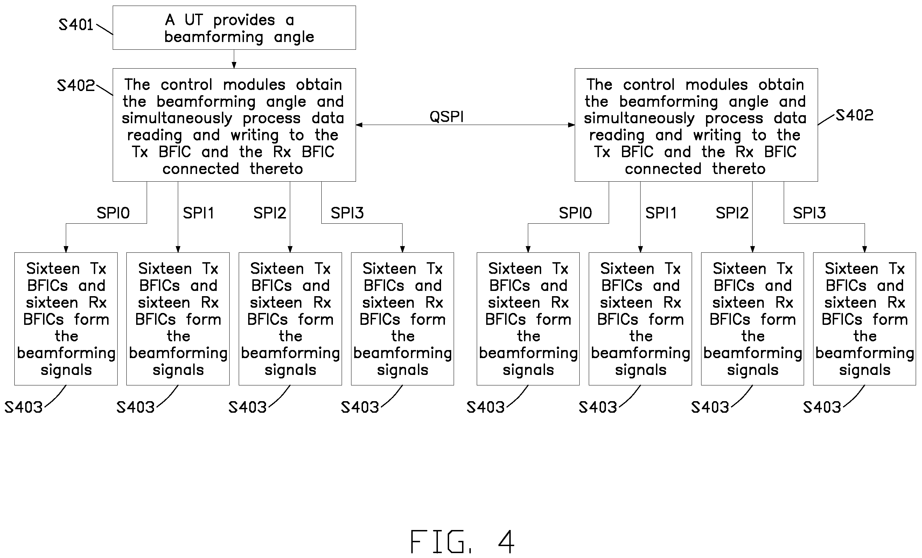

Referring to FIG. 4, a framework flow chart of the beamforming module control system according to an embodiment of the present application may include but is not limited to the following steps:

In step S401, a user terminal (UT) provides a beamforming angle.

In step S402, the plurality of control modules obtain the beamforming angle and simultaneously process data reading and writing to the transmitting beamforming modules and the receiving beamforming modules connected thereto through the plurality of SPIs.

In some embodiments, the UT can provide the beamforming angle to one of the plurality of control modules 80, the plurality of control modules 80 can communicate with each other and synchronously obtain the beamforming angle through the QSPIs. The plurality of control modules 80 can simultaneously process data reading and writing to the transmitting beamforming modules 32 and the receiving beamforming module 34 connected thereto through the plurality of SPIs 70.

In some embodiments, in the embodiment of the 32*32 antenna array, the UT can provide the beamforming angle to one of the plurality of control modules 80, the two control modules 80 can communicate with each other and synchronously obtain the beamforming angle through the QSPI. Each control module 80 can simultaneously process data reading and writing to the sixty-four groups of transmitting beamforming module (Tx BFIC) 32 and receiving beamforming module (Rx BFIC) 34 (such as each SPI line is connected to sixteen groups of transmitting beamforming module 32 and receiving beamforming module 34) through four SPIs 70 (such as each control module through four SPIs: SPI 0, SPI 1, SPI 2, SPI 3). Each group of transmitting beamforming module 32 and receiving beamforming module 34 includes one transmitting beamforming module 32 and one receiving beamforming module 34. The control modules 80, the buffers 61, the beamforming modules 30, and the antennas 12 connected to each SPI 70 can form a line. In the embodiment of the 32*32 antenna array, there can be eight SPI lines.

In some embodiments, in the two control modules 80, one of the two control modules 80 can be set as a master control module, the other one of the two control modules 80 can be set as a slave control module, the UT can provide the beamforming angle to the master control module, the master control module can synchronize the beamforming angle to the slave control module through the QSPI.

In step S403, sixteen Tx BFICs and sixteen Rx BFICs form the beamforming signals.

In some embodiments, the transmitting beamforming modules 32 and the receiving beamforming modules 34 can form the beamforming signals according to the beamforming angle, and provide same to the connected antennas 12 for transmitting and receiving radio beams with the beamforming angle.

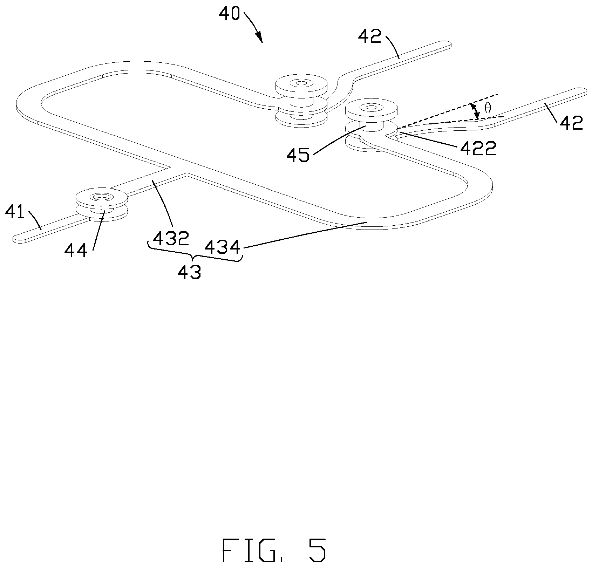

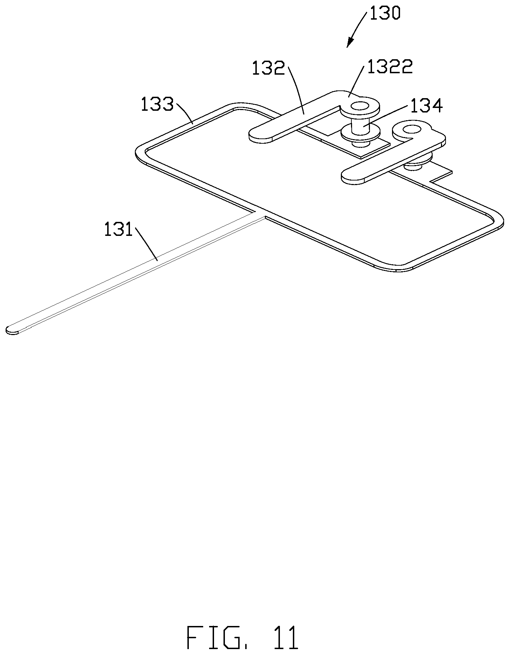

The beamforming module control system 2 further includes a plurality of multiplexers 40. The plurality of multiplexers 40 are connected to the beamforming modules 30 and configured to transmit the signals of the beamforming modules 30. In some embodiments, each transmitting beamforming modules 32 and each receiving beamforming modules 34 are connected to the several antennas 12 through several multiplexers 40, the several multiplexers 40 are configured to transmit the signals between the transmitting beamforming modules 32 or the receiving beamforming modules 34 and the several antennas 12. Such as the embodiment shown in FIGS. 5 to 10, each antenna 12 is configured to transmit and receive radio beams or radio signals, the multiplexer 40 can transmit the signals between the transmitting beamforming modules 32 and the receiving beamforming modules 34 and the antennas 12. Or, in some other embodiments, the plurality of transmitting beamforming modules 32 can be connected to each other through several multiplexers 40, the plurality of receiving beamforming modules 34 can be connected to each other through several multiplexers 40. For instance, referring to the embodiment shown in FIGS. 11 to 15, the array antenna 110 includes transmitting antennas 112 and receiving antennas 114. The transmitting antennas 112 are configured to transmit the radio beams or radio signals. The receiving antennas 114 are configured to receive the radio beams or radio signals. The multiplexers 40 can transmit the radio beams or radio signals to the transmitting antennas 112 through the transmitting beamforming modules 32 and the receiving beamforming modules 34, and transmit the radio beams or radio signals received by the receiving antennas 114 through the transmitting beamforming modules 32 and the receiving beamforming modules 34.

For instance, in the embodiment of the M*N antenna array in the related art, one beamforming module is needed to be set with eight channels, the M*N antenna array includes four SPIs, the four SPIs are connected to one control module, and the control module handles the execution of the four SPI lines, each of four SPI lines needs to control thirty-two beamforming modules. It is necessary to perform 256 (8*32) times 40-bit operations, and the time required is approximately 256* (840ns +260ns)=281.6us, where 840ns is the SPI transmission time, 260ns is the cmd interval time, ns is the time unit nanosecond, and us is the time unit microsecond. Since the plurality of SPIs run under the same control module, the control module usually processes one SPI line at a time, and the remaining SPI lines need to queue up and wait for the control module to process, which makes the actual time for processing subsequent SPI lines longer. For instance, processing the fourth SPI line (such as the SPI3 line) is four times the processing time of a single SPI line: (256 cmd*1.100us*4)=1.13ms, where ms is the time unit milliseconds. It can be understood that the above values are only theoretical values, and there may be a certain allowable error range in actual operation.

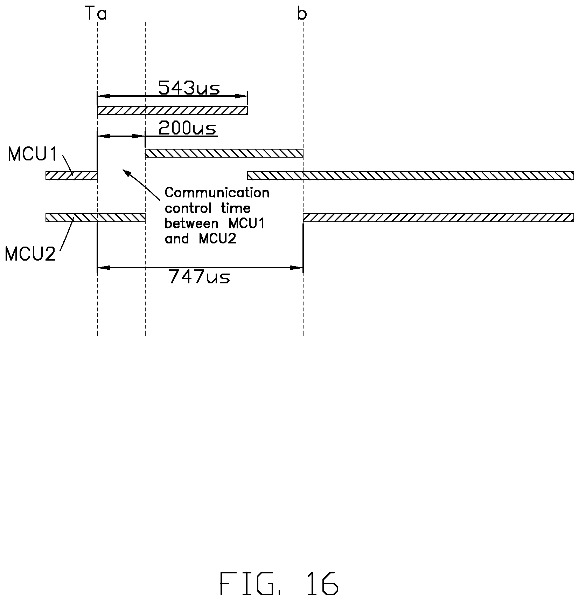

Referring to FIG. 16, for instance, in the embodiment of the present application of the M*N antenna array, one beamforming module is needed to be set with eight channels, the M*N antenna array includes eight SPIs, the eight SPIs are connected to two control modules, that is every four SPIs are connected to one control module, and the two control modules respectively handle the execution of the eight SPI lines, that is every control module handles the execution of the four SPI lines, each SPI line needs to control sixteen beamforming modules. The time required is approximately 16*8*1.1=140.8us, the system operation overhead time is about 20us. The internal operation time of the control module is about 180us, the time required for each SPI line is about 160us, the additional system operation overhead time of four SPI lines is about 60us, and the communication control time of the two control modules through QSPI is about 200us. The theoretical time required to execute and process eight SPI lines through the two control modules is: 180+160+60+200=600us. It is understood that the above values are only theoretical values, and there may be a certain allowable error range in actual operation. For instance, the measured data shown in FIG. 16 is 747us. According to experimental data, the plurality of control modules (such as the two control modules) can be used to reduce the time required to switch or adjust the specific pointing angle (or the beamforming angle) of the control beamforming signal, which is more conducive to achieving real-time angle conversion. The dashed lines shown in FIG. 16 are time scales, and different dashed lines represent different time scales.

According to the array arrangement of the beamforming modules 30 (including the transmitting beamforming modules 32 and the receiving beamforming modules 34), each control module 80 is correspondingly connected to a predetermined quantity of beamforming modules 30 (including the transmitting beamforming modules 32 and the receiving beamforming modules 34), such as the above-mentioned one control module 80 can be correspondingly connected to sixty-four beamforming modules 30 (or sixty-four groups of transmitting beamforming modules 32 and receiving beamforming modules 34). Instead of a single control module 80 connecting and controlling the beamforming modules 30 (including the transmitting beamforming modules 32 and the receiving beamforming modules 34) connected to the entire antenna array 10, the plurality of control modules 80 are used to connect the beamforming modules 30 (including the transmitting beamforming modules 32 and the receiving beamforming modules 34) connected to the entire antenna array 10. The plurality of control modules 80 cooperate to process the data and signals of the beamforming modules 30 (including the transmitting beamforming modules 32 and the receiving beamforming modules 34) connected to the entire antenna array 10, that is, the amount of data that needs to be processed by a single control module 80 is reduced, and the processing burden of each control module 80 is reduced, thereby improving the speed and quality of the control modules 80 processing the data of the beamforming modules 30 connected to the entire antenna array 10, and also reducing the time for switching or adjusting the specific pointing angle (or the beamforming angle) of the control beamforming signal, which is beneficial to improving the communication stability and response speed of the wireless communication device.

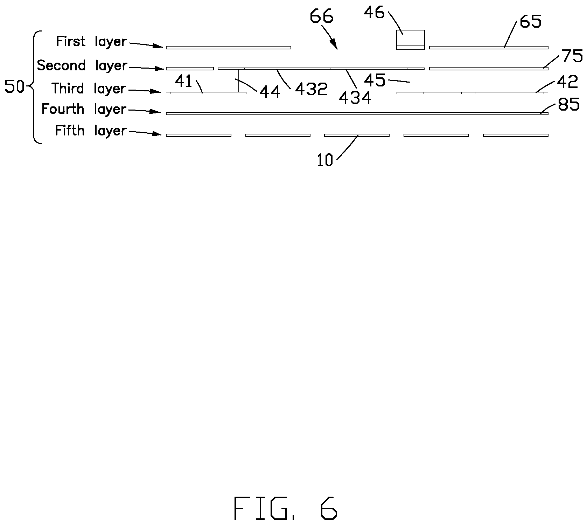

Referring to FIGS. 5 and 6, the array antenna module 1 further includes a circuit board 50.

The circuit board 50 may be a multi-layer circuit board structure. The array antenna 10, the LNA 20, the beamforming module 30, and the multiplexer 40 are electrically connected in sequence and arranged on the circuit board 50. In some embodiments, the array antenna 10, the LNA 20, the beamforming module 30, and the multiplexer 40 may be arranged on different layers of the circuit board 50.

The array antenna 10 is configured to transmit or receive wireless communication signals. The LNA 20 can be used to obtain a wireless communication signal from the array antenna 10 and output the wireless communication signal to the beamforming module 30 after amplification, or obtain a wireless communication signal from the beamforming module 30 and output the wireless communication signal to the array antenna 10 after amplification. The beamforming module 30 can be used to obtain the wireless communication signal from the array antenna 10 through the LNA 20 and analyze it, or compile the wireless communication signal and transmit it to the array antenna 10 through the LNA 20. The multiplexer 40 may be used to output the wireless communication signal received from the array antenna 10 after being analyzed by the beamforming module 30, or to transmit the input wireless communication signal compiled by the beamforming module 30 and transmit it by the array antenna 10.

Referring to FIG. 5 together, the multiplexer 40 includes a first end 41, at least two second ends 42, a connecting portion 43, a first conductive portion 44, and at least two second conductive portions 45. The multiplexer 40 is connected to the beamforming modules 30 and configured to transmit the signals of the beamforming modules 30. For instance, the multiplexer 40 can transmit signals of the beamforming modules 30 to the LNA 20, or transmit signals outputted by the LNA 20 to the beamforming modules 30.

One of the first end 41 and the at least two second ends 42 is connected to the array antenna 10 through the beamforming module 30 and the LNA 20 in sequence, for transmitting the wireless communication signal of the array antenna 10. In some embodiments, the first end 41 and the at least two second ends 42 are both substantially linear metal segment structures and are substantially parallel or non-parallel to each other. The first end 41 and the at least two second ends 42 are coplanar and arranged on a same layer of the circuit board 50, for example, a third layer. In some embodiments, the at least two second ends 42 may be symmetrical or asymmetrical structures, for example, the at least two second ends 42 may be symmetrically or asymmetrically arranged with respect to the first end 41. It can be understood that when the at least two second ends 42 are arranged in parallel or symmetrically, the at least two second ends 42 may have substantially the same signal transmission path, and have a better signal transmission effect.

In some embodiments, when the at least two second ends 42 are connected to the array antenna 10 through the beamforming module 30 and the LNA 20 in sequence, the multiplexer 40 can be a power combiner for receiving the wireless communication signal of the array antenna 10 through the at least two second ends 42 and outputting a combined signal through the first end 41. Alternatively, when the first end 41 is connected to the array antenna 10 through the beamforming module 30 and the LNA 20 in sequence, the multiplexer 40 can be a power divider for receiving the wireless communication signal through the first end 41 and outputting divided signals through the at least two second ends 42 respectively.

The connecting portion 43 is connected between the first end 41 and the at least two second ends 42, the first end 41 and the at least two second ends 42 are arranged on opposite ends of the connecting portion 43. The connecting portion 43 may include a first connecting section 432 and a second connecting section 434. In some embodiments, the first connecting section 432 is substantially a straight metal section, and the second connecting section 434 is substantially a rectangular ring-shaped metal section structure. One end of the first connecting section 432 is connected to the first end 41, and the other end of the first connecting section 432 is connected to a substantially middle position of a long side of the second connecting section 434. The other long side of the second connecting section 434 can be connected to the at least two second ends 42 respectively. In some embodiments, the connection portion 43 is not coplanar with the first end 41 and the at least two second ends 42, and can be arranged on different layers of the circuit board 50. For example, the connection portion 43 can be arranged on a second layer of the circuit board 50. In some embodiments, the connection portion 43 is arranged on the second layer of the circuit board 50, which is convenient to arrange wiring with other multiplexers 40. In some embodiments, the second connecting section 434 may also be in other symmetrical regular shapes, such as a circle, an ellipse, a rectangle, etc., and the second connecting section 434 is symmetrical with respect to the first connecting section 432.

In some embodiments, each of the first end 41 and the at least two second ends 42 have a first resistance value, and the connection portion 43 has a second resistance value, wherein the first resistance value may be less than or equal to the second resistance value. The first resistance value may be, but is not limited to, 50 ohms ($\Omega$), and the second resistance value may be, but is not limited to, 70.7 ohms. In some embodiments, a signal transmission path of the first end 41 is divided into two signal transmission paths of the at least two second ends 42, in order to make the energy equal, the connection portion 43 connecting the first end 41 and the at least two second ends 42 meets a formula $Z = \sqrt{2} * Z_0$ , wherein $Z_0$ is the first resistance value of the first end 41 and the at least two second ends 42, that is $Z_0$=50 ohms, Z is the second resistance value of the connection portion 43, calculation shows that Z=70.7 ohms. Since the first end 41 and the at least two second ends 42 are respectively set with the same preset resistance value, and the connection portion 43 is set with a different preset resistance value, the energy transmitted by the first end 41, the connection portion 43, and the at least two second ends 42 is substantially equal, thereby reducing the loss of energy transmission. The first connecting section 432 can be used to convert the first resistance value of the first end 41 to the second resistance value of the connecting portion 43 during energy transmission, or to convert the second resistance value of the connecting portion 43 to the first resistance value of the first end 41. In some embodiments, to match the configuration of the circuit board 50, the connection portion 43, the first end 41, and the at least two second ends 42 may have different line widths, so that the connecting portion 43, the first end 41, and the at least two second ends 42 may have substantially equal signal transmission powers.

The first conductive portion 44 is connected between the first end 41 and the connecting portion 43, and the first conductive portion 44 connects the layer or plane where the first end 41 is located and the layer or plane where the connecting portion 43 is located, that is, the first conductive portion 44 connects the second layer and the third layer of the circuit board 50. In some embodiments, the first conductive portion 44 may be, but is not limited to, a metal column, one end of the metal column is connected to the first end 41, and the other end of the metal column is connected to the first connecting section 432.

The at least two second conductive portions 45 are connected between the at least two second ends 42 and the connecting portion 43, and the second conductive portions 45 connect the layer or plane where the at least two second ends 42 are located and the layer or plane where the connecting portion 43 is located, that is, the second conductive portions 45 connect the second layer and the third layer of the circuit board 50. In some embodiments, the second conductive portions 45 may be, but are not limited to, two metal pillars, one end of the two metal pillars is respectively connected to the at least two second ends 42, and the other end of the two metal pillars is connected to a side of the second connecting section 434 away from the first connecting section 432. In some embodiments, an extension line of the first connecting section 432 is substantially perpendicular to a connection line of the two second conductive portions 45 (i.e., the two metal pillars).

In some embodiments, each of the at least two second ends 42 includes a connection point 422. The connection points 422 of the at least two second ends 42 are connected to the second conductive portions 45, respectively. The second end 42 is formed by the connection point 422 extending outward from the second conductive portion 45. A direction in which the second end 42 extends outward from the connection point 422 and a direction perpendicular to the second connection section 434 form an angle θ . In some embodiments, the angle θ may range from, but is not limited to, 0 degrees to 90 degrees.

Referring to FIG. 5 again, in some embodiments, the signal transmission direction of the first end 41 is substantially the same as the signal transmission direction of the at least two second ends 42. In some embodiments, a vector difference between the signal transmission direction of the first end 41 and the signal transmission direction of the at least two second ends 42 may be 0 degrees to 90 degrees. For instance, the signal transmission direction of the first end 41 is toward the first conductive portion 44, the first conductive portion 44 transmits the signal to the first connecting section 432, and the signal transmission direction of the first connecting section 432 is from the first conductive portion 44 toward the second connecting section 434, but the signal transmission direction of the first end 41 is consistent with the signal transmission direction of the first connecting section 432. The signal transmission direction of the first end 41 and the first connecting section 432 can be defined as a first vector. The second connecting section 434 obtains the signal from the first connecting section 432 and transmits the signal to the two second conductive portions 45. The at least two second ends 42 are respectively connected to the two second conductive portions 45 through the connecting points 422 and serve as endpoints of the signal transmission of the at least two second ends 42. The structure along the at least two second ends 42 serves as the signal transmission paths of the at least two second ends 42. The signal transmission direction of the at least two second ends 42 can be defined as a second vector. A vector difference between the first vector and the second vector can be 0 degrees to 90 degrees. It can be understood that when the at least two second ends 42 are signal input ends, the first end 41 is a signal output end, and the signal transmission path can be the same as described above, but the signal transmission direction is opposite, which will not be repeated here.

Please refer to FIG. 6, the multiplexer 40 may further include a resistor 46. The resistor 46 may be in contact with the connecting portion 43 through the second conductive portion 45. In some embodiments, the resistor 46 is not on the same plane as the first end 41, the at least two second ends 42, and the connecting portion 43. The resistor 46 can be arranged on the first layer of the circuit board 50. In some embodiments, the second conductive portion 45 can be respectively connected to the resistor 46, the second connecting section 434 of the connecting portion 43, and the at least two second ends 42, that is, the second conductive portion 45 can connect the first layer, the second layer, and the third layer of the circuit board 50.

In some embodiments, the array antenna 10 can be arranged on another layer of the circuit board 50, which is not coplanar with the layer where the first end 41 and the at least two second ends 42 are located and the layer where the connecting portion 43 is located. For example, the array antenna 10 can be arranged on a fifth layer of the circuit board 50. In some embodiments, the fifth layer where the array antenna 10 is located may be a surface layer of the array antenna module 1, and the first layer where the resistor 46 is located may be an internal layer of the array antenna module 1. In other embodiments, the first layer where the resistor 46 is located may be a surface layer of the array antenna module 1, and the fifth layer where the array antenna 10 is located may be an internal layer of the array antenna module 1.

In some embodiments, the array antenna module 1 may further include a first ground layer 65, a second ground layer 75, and a third ground layer 85.

The first ground layer 65 may be arranged on the first layer of the circuit board 50 and arranged adjacent to the resistor 46. The second ground layer 75 may be arranged on the second layer of the circuit board 50 and arranged adjacent to the connecting portion 43. The third ground layer 85 may be arranged on a fourth layer of the circuit board 50. The third ground layer 85 may be located between the layer where the array antenna 10 is located and the layer where the first end 41 and the at least two second ends 42 are located. The first ground layer 65, the second ground layer 75, and the third ground layer 85 may be used to provide grounding for the array antenna 10 and the multiplexer 30. The second ground layer 75 and the third ground layer 85 may be used as reference grounds for the first end 41 and the at least two second ends 42, and the third ground layer 85 may be used as a reference ground for the connection portion 43. In some embodiments, the first ground layer 65 is provided with an opening 66, and the opening 66 is arranged corresponding to the second connection portion 434, so that the second connection portion 434 can have a larger wiring width on the circuit board 50, thereby reducing the energy transmission loss of the second connection portion 434 when transmitting signals.

In some embodiments, a first through hole is formed through the second layer to the third layer of the circuit board 50. The second through hole is filled with a metal conductor to form the first conductive portion 44. The first conductive portion 44 penetrates the second layer to the third layer of the circuit board 50 to respectively connect the connecting portion 43 on the second layer and the first end 41 on the third layer, to achieve electrical connection and signal transmission between the connecting portion 43 and the first end 41. Second through holes are formed through the first layer to the third layer of the circuit board 50. The second through hole are filled with metal conductors to form the two second conductive portions 45. The second conductive portions 45 penetrate the first layer to the third layer of the circuit board 50 to respectively connect the resistor 46 located on the first layer, the connecting portion 43 located on the second layer, and the at least two second ends 42 located on the third layer, so as to realize electrical connection and signal transmission among the resistor 46, the connecting portion 43, and the at least two second ends 42. It can be understood that the first to fifth layers of the circuit board 50 can be spaced apart from each other and arranged in parallel.

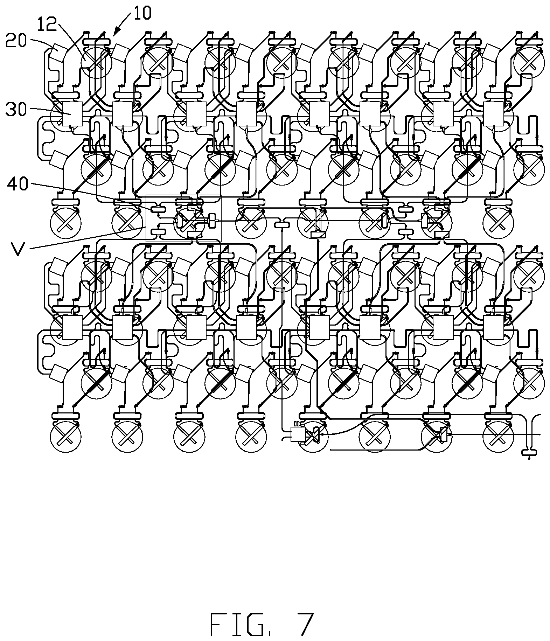

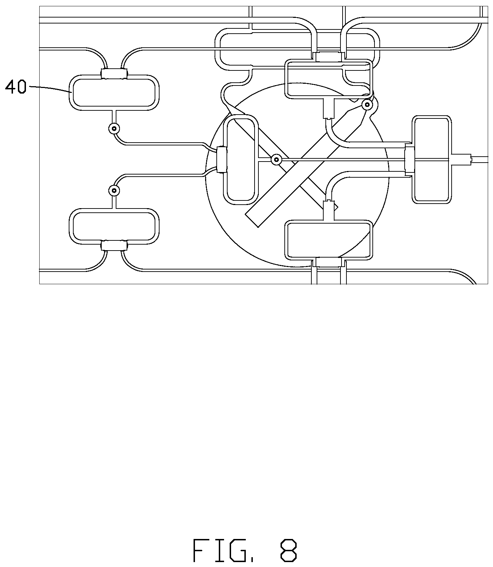

Referring to FIGS. 7 and 8, the array antenna 10 includes a plurality of antennas 12.

the plurality of antennas 12 are arranged in rows. In each row, every two adjacent antennas 12 are spaced apart by a predetermined distance. Every two adjacent rows of antennas 12 are staggered to form an array arrangement, that is, the array antenna 10. For instance, in an $N+1^{th}$ row, each antenna 12 is staggered between two adjacent antennas 12 in a $N^{th}$ row, where N is a positive integer greater than or equal to 1.

In some embodiments, the array antenna module 1 may include a plurality of multiplexers 40, and each multiplexer 40 may be connected to two antennas 12 through the beamforming module 30 and the LNA 20. For example, each multiplexer 40 may be connected to two antennas 12 through the at least two second ends 42. When the array antenna 10 is arranged in a predetermined array, every two antennas 12 are connected to one multiplexer 40, and the multiplexer 40 inputs the wireless communication signals of the two antennas 12 through the at least two second ends 42, and outputs one signal through the first end 41. It can be understood that the plurality of multiplexers 40 connected to the antennas 12 are connected in parallel and are located at a same stage. After these multiplexers 40 output one signal, it is output again to the at least two second ends 42 of the multiplexer 40 of a next stage, the first end 41 of the multiplexer 40 of the next stage further outputs one signal, and so on. Through the cascade connection of multiple stages of multiplexers 40, finally the multiplexer 40 of a last stage outputs one signal. It can be understood that in signal transmission of multiplexers 40 at multiple stages, the multiplexers 40 at the same stage are connected in parallel, and the multiplexers 40 at different stages are connected in series. Wherein, the plurality can include "one" or "plurality".

For instance, in a 4*4 array antenna, there are four rows arranged, four antennas 12 in each row, and sixteenth antennas 12 in total. Every two antennas 12 are connected to one multiplexer 40, so the sixteenth antennas 12 are connected to eight multiplexers 40, and the eight multiplexers 40 may be located in a first stage. The eight multiplexers 40 can transmit the wireless communication signals of the sixteenth antennas 12 and output them as eight signals, the eight signals are then connected to one multiplexer 40 by connecting every two signals, thus, the eight signals are connected to four multiplexers 40, and the four multiplexers 40 can be located in a second stage. The four multiplexers 40 can transmit the preceding eight signals and output them as four signals. The four signals are then connected to one multiplexer 40 by connecting every two signals, thus, the four signals are further connected to two multiplexers 40, and the two multiplexers 40 can be located at a third stage. The two multiplexers 40 can transmit the preceding four signals and output them as two signals, and the two signals are connected to one multiplexer 40, the multiplexer 40 can be located at a fourth stage, and the multiplexer 40 can transmit the preceding two signals and finally output one signal. It can be understood that the signal finally outputted by the array antenna module 1 through the multi-stage multiplexer 40 can be outputted to other modules or components of the wireless communication device to realize wireless communication of the wireless communication device.

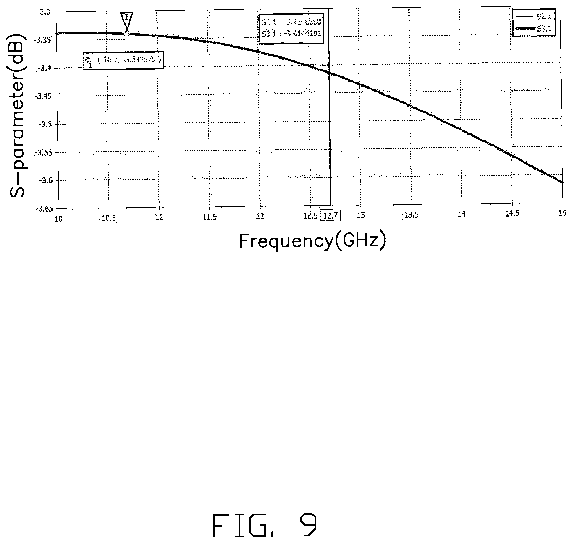

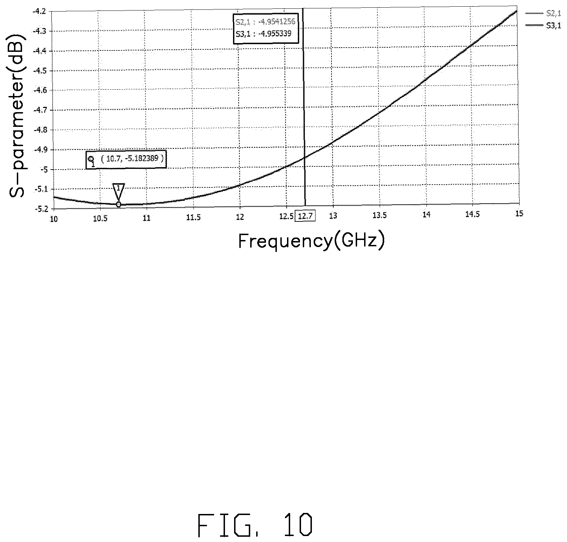

Referring to FIGS. 9 and 10, FIG. 9 shows an S-parameter curve diagram when the first end 41 and the at least two second ends 42 of the multiplexer 40 are arranged on the same layer of the circuit board 50, i.e., the third layer, and the connecting portion 43 is arranged on another layer of the circuit board 50, i.e., the second layer. At this time, an overall maximum loss of the multiplexer 40 is approximately 3.41 decibels (dB). FIG. 10 shows an S-parameter curve diagram when the first end 41, the at least two second ends 42, and the connecting portion 43 of the multiplexer 40 are arranged on the same layer of the circuit board 50, i.e., the third layer. At this time, an overall maximum loss of the multiplexer 40 is approximately 4.91 decibels (dB). It can be seen that the loss is relatively greater in the inner layer, and compared with the two arrangements of FIG. 9 and FIG. 10, the first end 41 and the at least two second ends 42 of the multiplexer 40 in the embodiment of the present application and the connecting portion 43 are arranged on different layers of the circuit board 50 (especially the connecting portion 43 is arranged at the outer layer of the circuit board 50). Compared with the first end 41, at least two second ends 42, and the connecting portion 43 of the multiplexer 40 being arranged on the same layer of the circuit board 50, the signal transmission loss of the multiplexer 40 in the embodiment of the present application is lower, which is more conducive to the multiplexer 40 being used for signal transmission of the array antenna 10.

The multiplexer 40 provided in the present application is connected to the array antenna 10 through one of the first end 41 or the at least two second ends 42, so that the multiplexer 40 can transmit the signal of the array antenna 10, the connecting part 43 and the first end 41 and the at least two second ends 42 are arranged on different layers of the circuit board 50, so that the multiplexer 40 is not arranged flat on the same plane, which saves the design space of the multiplexer 40 on the plane, being more conducive to the signal transmission wiring of the array antenna module 1, and the loss of the multiplexer 40 during signal transmission is low, which is more conducive to the use of the multiplexer 40 for signal transmission of the array antenna 10.

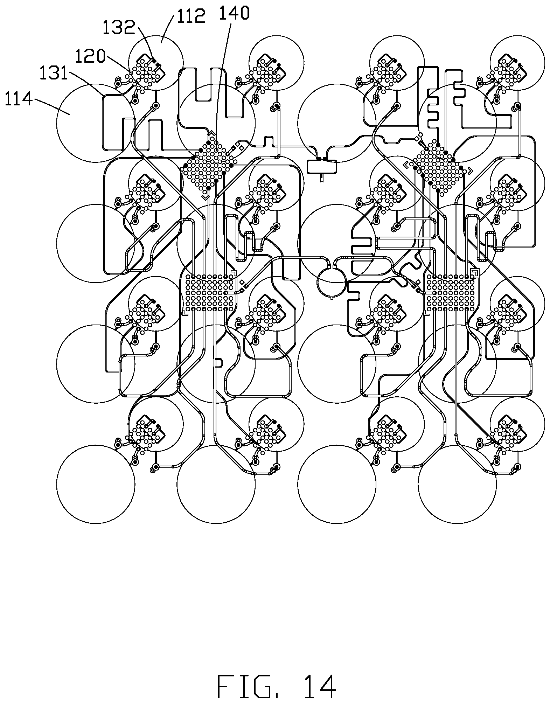

Referring to FIGS. 11 and 14, in some other embodiments of the present application, the wireless communication device may include an array antenna 110. The beamforming module control system 2 includes a LNA 120, a multiplexer 130, and a beamforming module 140.

The array antenna 110, the LNA 120, the multiplexer 130, and the beamforming module 140 are electrically connected in series. The array antenna 110 is configured to transmit or receive wireless communication signals. One end of the multiplexer 130 is connected to the array antenna 110 via the LNA 120, and another end of the multiplexer 130 is connected to the beamforming module 140. The LNA 120 can be used to obtain a wireless communication signal from the array antenna 110 and output the wireless communication signal to the multiplexer 130 after amplification, or obtain a wireless communication signal from the multiplexer 130 and output the wireless communication signal to the array antenna 110 after amplification. The multiplexer 130 may be used to transmit the wireless communication signal of the array antenna 110 to the beamforming module 140, or transmit the wireless communication signal of the beamforming module 140 to the array antenna 110. The beamforming module 140 can be used to obtain the wireless communication signal from the array antenna 110 through the multiplexer 130 and analyze it, or compile the wireless communication signal and transmit it to the array antenna 110 through the multiplexer 130.

Referring to FIG. 11 together, the multiplexer 130 includes a first end 131, at least two second ends 132, a first connecting portion 133, and at least two second connecting portions 134. The multiplexer 130 is connected to the beamforming module 140 and configured to transmit the signals of the beamforming modules 140. For instance, the multiplexer 130 can transmit signals outputted by the beamforming module 140, or transmit signals to the beamforming module 140.

One of the first end 131 and the at least two second ends 132 is connected to the array antenna 110, the other one of the first end 131 and the at least two second ends 132 is connected to the beamforming module 140. In some embodiments, the first end 131 and the at least two second ends 132 are both substantially linear metal segment structures and are substantially parallel to each other. The at least two second ends 132 are coplanar. The first end 131 and the at least two second ends 132 are non-coplanar.

The first connection portion 133 is connected to the first end 131 and is coplanar with the first end 131. In some embodiments, the first connection portion 133 is substantially a rectangular ring-shaped metal segment structure, and the first end 131 is connected to a substantially middle position of a long side of the rectangular ring-shaped first connection portion 133. In some embodiments, the plane or layer where the first end 131 and the first connecting portion 133 are located is substantially parallel to a plane or layer where the at least two second ends 132 are located. In some embodiments, the first connection portion 133 may also be in other symmetrical regular shapes, such as a circle, an ellipse, a rectangle, a straight line, or a combination of any two of the above shapes, and the first connection portion 133 may be in a symmetrical structure with respect to the first end 131; or the first connection portion 133 may also be in an asymmetrical or irregular shape. In contrast, when the first connection portion 133 is in a symmetrical regular shape, the signal transmission effect is better because the signal transmission paths are substantially the same.

One end of each of the at least two second connection portions 134 is connected to an end of the first connection portion 133 away from the first end 131, and the other end of the at least two second connection portions 134 are connected to the at least two second ends 132, respectively. The second connection portions 134 connect the plane or layer where the first end 131 is located and the plane or layer where the at least two second ends 132 are located. In some embodiments, the second connecting portions 134 may be, but is not limited to, two metal columns, one end of the two metal columns is connected to the at least two second ends 132, and the other end of the two metal columns is connected to a substantially middle position of a long side of the rectangular ring-shaped first connecting portion 133 that away from the first end 131.

In some embodiments, each of the at least two second ends 132 includes a connection point 1322, the connection point 1322 is connected to the second connection portion 134, the second end 132 is formed by the connection point 1322 extending from the second connection portion 134 toward the first end 131. In some embodiments, a projection of the at least two second ends 132 in a first direction are located within a projection range of the first connection portion 133 in the first direction. The first direction is a direction in which the at least two second ends 132 are perpendicular to the first connection portion 133.

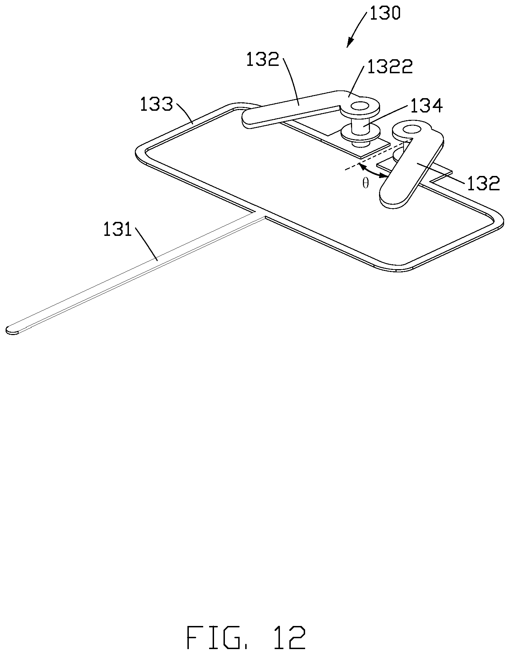

Referring to FIGS. 11 and 12, the direction from the connection point 1322 of the second end 132 toward the first end 31 has an angle θ with a direction perpendicular to a side of the second connection portion 134. In some embodiments, the angle θ may range from, but is not limited to, 0 degrees to 90 degrees.

In some embodiments, a signal transmission direction of the at least the two second ends 132 is substantially opposite to a signal transmission direction of the first end 131. In some embodiments, a vector difference between the signal transmission direction of the first end 131 and the signal transmission direction of the at least two second ends 132 may be 90 degrees to 180 degrees. For instance, the signal transmission direction of the first end 131 is toward the first connection portion 133, the signal transmission direction of the first end 131 can be defined as a first vector. The first connection portion 133 obtains a signal from the first end 131 and transmits the signal to the two second connection portions 134. The at least two second ends 132 are respectively connected to the two second connection portions 134 through the connection points 1322 and serve as endpoints of the signal transmission of the at least two second ends 132, the structure along the at least two second ends 132 serves as a path for the signal transmission of the at least two second ends 132, the signal transmission direction of the at least two second ends 132 may be defined as a second vector, and the vector difference between the first vector and the second vector may be 90 degrees to 180 degrees. It can be understood that when the at least two second ends 132 are signal input ends, the first end 131 is a signal output end, and the signal transmission paths can be the same as described above, but the signal transmission directions are opposite, which will not be repeated here.

In some embodiments, each of the first end 131 and the at least two second ends 132 have a first resistance value, and the first connection portion 133 has a second resistance value, wherein the first resistance value may be less than or equal to the second resistance value. The first resistance value may be, but is not limited to, 50 ohms (Q), and the second resistance value may be, but is not limited to, 70.7 ohms. In some embodiments, a signal transmission path of the first end 131 is divided into two signal transmission paths of the at least two second ends 132, in order to make the energy equal, the first connection portion 133 connecting the first end 131 and the at least two second ends 1132 meets a formula $Z = \sqrt{2} * Z_0$, wherein $Z_0$ is the first resistance value of the first end 131 and the at least two second ends 132, that is $Z_0 = 50$ ohms, Z is the second resistance value of the first connection portion 133, calculation shows that Z=70.7 ohms. Since the first end 131 and the at least two second ends 132 are respectively set with the same preset resistance value, and the first connection portion 133 is set with a different preset resistance value, the energy transmitted by the first end 131, the first connection portion 133, and the at least two second ends 132 is substantially equal, thereby reducing the loss of energy transmission. In some embodiments, to match the configuration of the array antenna module 1, the first connection portion 133, the first end 131 and the at least two second ends 132 may have different line widths, so that the first connection portion 133 and the first end 131, at least two second ends 132 may have substantially equal signal transmission powers.

The first end 131 may be used to receive a wireless communication signal from the array antenna 110 through the LNA 120. The first end 131, the first connection portion 133, the second connection portions 134, and the at least two second ends 132 sequentially transmit the wireless communication signal, and then the at least two second ends 132 transmit the wireless communication signal to the beamforming module 140. Alternatively, the first end 131 can receive a wireless communication signal from the beamforming module 140, and the first end 131, the first connecting portion 133, the second connecting portions 134, and the at least two second ends 132 sequentially transmit the wireless communication signal, and then the at least two second ends 132 transmit the wireless communication signal to the array antenna 110 through the LNA 120.

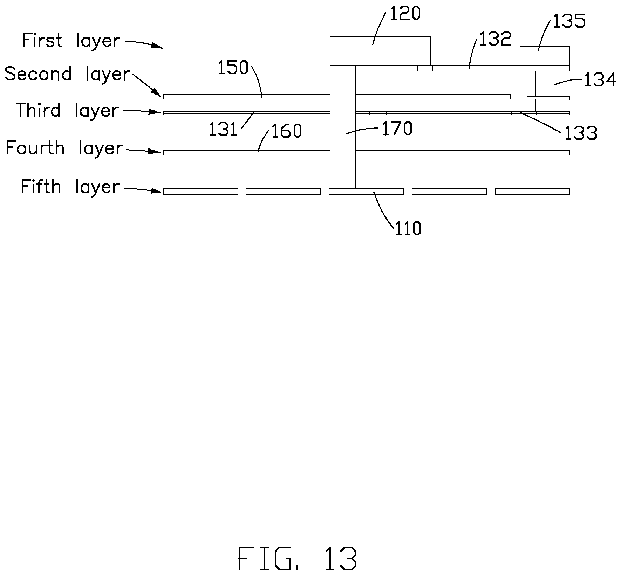

Referring to FIG. 13, in some embodiments, the array antenna module 1 may be a multi-layer structure. The first end 131 is connected to the first connection portion 133, and the first end 131 is coplanar with the first connection portion 133, the first end 131 and the first connection portion 133 may be located on a same layer of the array antenna module 1, such as a third layer. The at least two second ends 132 may be located at another layer of the array antenna module 1, such as a first layer. The second connection portions 134 run through the layer where the first end 131 and the first connection portion 133 are located and the layer where the at least two second ends 132 are located, that is, the second connection portions 134 run through the first layer to the third layer. In some embodiments, at least two first through holes are formed through the first layer and the third layer of the array antenna module 1, and the at least two first through holes are filled with metal conductors to form the second connection portions 134. An extension direction of the at least two second ends 132 is substantially the same as that of the first end 131, and the at least two second ends 132 extend to be spaced apart from the first connection portion 133.

The multiplexer 130 may further include a resistor 135. The resistor 135 contacts the at least two second ends 132. In some embodiments, the resistor 135 contacts one end of the at least two second ends 132 connected to the second connecting portions 134, and the resistor 135 is disposed on the first layer of the array antenna module 1.

In some embodiments, the array antenna 110 can be arranged on another layer of the array antenna module 1, which is not coplanar with the layer where the first end 131 and the first connecting portion 133 are located and the layer where the at least two second ends 132 are located, for example, the array antenna 110 can be arranged on a fifth layer of the array antenna module 1. In some embodiments, the fifth layer where the array antenna 110 is located may be a surface layer of the array antenna module 1, and the first layer where at least two second ends 132 are located may be an internal layer of the array antenna module 1. In some other embodiments, the first layer where the at least two second ends 132 are located may be a surface layer of the array antenna module 1, and the fifth layer where the array antenna 110 is located may be an internal layer of the array antenna module 1. The LNA 120 may be disposed on the first layer of the array antenna module 1.

In some embodiments, the array antenna module 1 may further include a first ground layer 150 and a second ground layer 160.

The first ground layer 150 may be located between the layer where the first end 131 is located and the layer where the at least two second ends 132 are located, for example, a second layer of the array antenna module 1. The second ground layer 160 may be located between the layer where the first end 131 is located and the layer where the array antenna 110 is located, such as a fourth layer of the array antenna module 1. The first ground layer 150 and the second ground layer 160 may be used to provide grounding for the array antenna 110 and the multiplexer 130.

In some embodiments, a second through hole is formed from the first layer through the fifth layer of the array antenna module 1, the second through hole is filled with a metal conductor to form a third connecting portion 170. The third connection portion 170 penetrates the first layer to the fifth layer of the array antenna module 1 to respectively connect the LNA 120 on the first layer and the array antenna 110 on the fifth layer, so as to achieve electrical connection and signal transmission between the LNA 120 and the array antenna 110. It can be understood that the multi-layer structure of the array antenna module 1, for example, the first layer to the fifth layer can be spaced apart from each other and arranged in parallel.

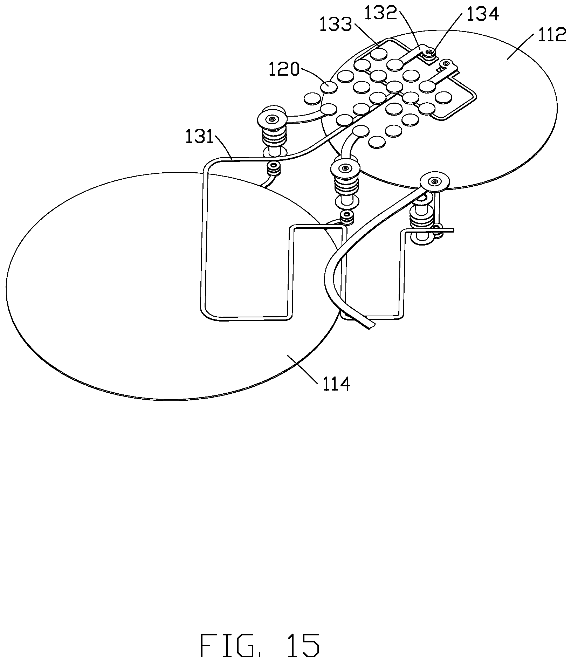

Referring to FIGS. 14 and 15, the array antenna 110 may include a plurality of transmitting antennas 112 and a plurality of receiving antennas 114.

The plurality of transmitting antennas 112 are arranged in rows. In each row, every two adjacent transmitting antennas 112 are spaced apart by a first predetermined distance.

The plurality of receiving antennas 114 are arranged in rows. In each row, every two adjacent receiving antennas 114 are spaced apart by a second predetermined distance. Each receiving antenna 114 is staggered between two transmitting antennas 112.

Each row of transmitting antennas 112 and each row of receiving antennas 114 are staggered to form an array arrangement, that is, to form the array antenna 110. In some embodiments, the first predetermined distance may be greater than, equal to, or less than the second predetermined distance, and this application does not limit this.

The multiplexer 130 is staggered between the transmitting antenna 112 and the receiving antenna 114. In some embodiments, the array antenna module 1 may include a plurality of multiplexers 130, and each multiplexer 130 may be connected to a group of transmitting antennas 112 and receiving antennas 114. Wherein, the plurality can include "one" or "plurality".

When the at least two second ends 132 of the multiplexer 130 are connected to the receiving antennas 114 of the array antenna 110 through the LNA 120, the first end 131 is connected to the beamforming module 140, and the multiplexer 130 can be used as a power combiner to receive the wireless communication signal of the array antenna 110 through the at least two second ends 132 and transmit the wireless communication signal to the beamforming module 140 through the first end 131. Alternatively, when the at least two second ends 132 of the multiplexer 130 are connected to the transmitting antennas 112 of the array antenna 110 through the LNA 120, the first end 131 is connected to the beamforming module 140, and the multiplexer 130 can be used as a power divider to receive the wireless communication signal of the beamforming module 140 through the first end 131 and transmit the wireless communication signal to the array antenna 110 through the at least two second ends 132.

In some embodiments, the beamforming module 140 may be connected to the first end 131 of one or more multiplexers 130. For example, the beamforming module 140 may be connected to the first end 131 of eight multiplexers 130, the at least two second ends 132 of each multiplexer 130 can be connected to one of a group of transmitting antennas 112 and receiving antennas 114 of the array antenna 110, so one beamforming module 140 can be connected to eight groups of transmitting antennas 112 and receiving antennas 114 through eight multiplexers 130. Among the multiple multiplexers 130 connected to the beamforming module 140, a length of the connection between the first end 131 of each multiplexer 130 and the beamforming module 140 is approximately equal, so that the signal transmission paths between the beamforming module 140 and the multiple multiplexers 130 are approximately the same length, which can have approximately equal energy transmission losses, thereby ensuring that the signal transmission quality of each signal transmission path is approximately the same, and is also more conducive to the signal transmission wiring of the multiple multiplexers 130 in the entire array antenna module 1. In other embodiments, one beamforming module 140 may also be connected to two, four, or sixteen groups of transmitting antennas 112 and receiving antennas 114, which is not limited in the present application.

The multiplexer 130 provided in the present application is connected to the array antenna 110 through one of the first end 131 or the at least two second ends 132, and the other of the first end 131 or the at least two second ends 132 is connected to the beamforming module 140, so that the multiplexer 130 can transmit signals between the array antenna 110 and the beamforming module 140, the signal transmission direction of the at least the two second ends 132 is opposite to the signal transmission direction of the first end 131, so that the multiplexer 130 is not arranged flat on the same plane, saving the design space of the multiplexer 130 on the plane and being more conducive to the signal transmission wiring of the array antenna module 1.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including the full extent established by the broad general meaning of the terms used in the claims.

## Claims

1.   A beamforming module control system (2) applied in an array antenna (10, 110), the beamforming module control system (2) comprising:

   a plurality of beamforming modules (30, 140) respectively connected to the array antenna (10, 110) and configured to transmit signals to the array antenna (10, 110), the plurality of beamforming modules (30, 140) arranged to form a plurality of beamforming module zones; and
   a plurality of control modules (80) respectively connected to the plurality of beamforming modules (30, 140) and configured to process signals of the plurality of beamforming modules (30, 140) connected thereto, each of the plurality of control modules (80) connected to one of the plurality of beamforming module zones, each of the plurality of control modules (80) connected to each other.

2.   The beamforming module control system (2) of claim 1, wherein the plurality of beamforming modules (30, 140) comprise a plurality of transmitting beamforming modules (32) and a plurality of receiving beamforming modules (34), each of the plurality of beamforming module zones comprises at least one of the plurality of transmitting beamforming modules (32) and at least one of the plurality of receiving beamforming modules (34), each of the plurality of control modules (80) is configured to process the signals of the at least one of the plurality of transmitting beamforming modules (32) and at least one of the plurality of receiving beamforming modules (34) in the beamforming module zone connected thereto.

3.   The beamforming module control system (2) of claim 2, wherein a quantity of the beamforming modules (30, 140) included in each of the plurality of beamforming module zones is equal, quantities of the transmitting beamforming modules (32) and the receiving beamforming modules (34) included in each of the plurality of beamforming module zones are equal.

4.   The beamforming module control system (2) of claim 1, further comprising a plurality of buffers (61), wherein the plurality of buffers (61) comprise a plurality of first buffers and a plurality of second buffers, each of the plurality of control modules (80) is connected to two rows of the beamforming modules (30, 140) of each of the plurality of beamforming module zones through two of the first buffers and one of the second buffers.

5. The beamforming module control system (2) of claim 4, wherein the plurality of buffers (61) comprise a plurality of transmitting buffers (62) and a plurality of receiving buffers (64), each of the plurality of beamforming modules (30, 140) is connected to the array antenna (10, 110) through the plurality of transmitting buffers (62) and the plurality of receiving buffers (64).

6. The beamforming module control system (2) of claim 1, further comprising a plurality of multiplexers (40, 130), wherein the plurality of multiplexers (40, 130) are connected to the plurality of beamforming modules (30, 140) and configured to transmit the signals of the plurality of beamforming modules (30, 140), each of the plurality of multiplexers (40, 130) is a multilayer structure.

7. The beamforming module control system (2) of claim 2, wherein the plurality of control modules (80) obtain a beamforming angle provided by a user terminal and simultaneously process data reading and writing to the plurality of transmitting beamforming modules (32) and the plurality of receiving beamforming module (34) connected thereto, the plurality of transmitting beamforming modules (32) and the plurality of receiving beamforming module (34) form beamforming signals accordingly.

8. The beamforming module control system (2) of claim 4, further comprising a plurality of serial peripheral interfaces (SPIs) (70) and a quad serial peripheral interface (QSPI), wherein the plurality of control modules (80), the plurality of buffers (61), and the plurality of beamforming modules (30, 140) are connected through the plurality of SPIs (70), the control modules (80) are connected to each other through the QSPI.

9. A wireless communication device comprising an array antenna (10, 110) and the beamforming module control system (2) according to any one of claims 1 to 8.

10. The wireless communication device of claim 9, wherein the array antenna (10, 110) comprises a plurality of antennas (12) arranged in rows, in each row, every two adjacent antennas (12) are spaced apart by a predetermined distance, every two adjacent rows of antennas (12) are staggered to form an array arrangement.

11. The wireless communication device of claim 10, wherein each of the plurality of transmitting beamforming modules (32) is connected to one or more of the plurality of antennas (12), each of the plurality of receiving beamforming modules (34) is connected to one or more of the plurality of antennas (12).

12. The wireless communication device of claim 9, further comprising a circuit board (50), wherein the array antenna (10, 110) and the beamforming module control system (2) are arranged on the circuit board (50).

13. The wireless communication device of claim 12, wherein the array antenna (10, 110) and the plurality of multiplexers (40, 130) are arranged on different layers of the circuit board (50).

FIG. 1

FIG. 2

FIG. 3

EP 4 611 267 A1

```
        ┌──────────────────────┐
 S401 ──│  A UT provides a     │
        │  beamforming angle   │
        └──────────┬───────────┘
                   │
                   ▼
 S402 ──┌──────────────────────┐         QSPI         ┌──────────────────────┐
        │ The control modules  │◄──────────────────►  │ The control modules  │── S402
        │ obtain the beam-     │                      │ obtain the beam-     │
        │ forming angle and    │                      │ forming angle and    │
        │ simultaneously       │                      │ simultaneously       │
        │ process data reading │                      │ process data reading │
        │ and writing to the   │                      │ and writing to the   │
        │ Tx BFIC and the Rx   │                      │ Tx BFIC and the Rx   │
        │ BFIC connected       │                      │ BFIC connected       │
        │ thereto              │                      │ thereto              │
        └──────────────────────┘                      └──────────────────────┘
```

SPI0    SPI1    SPI2    SPI3              SPI0    SPI1    SPI2    SPI3

Sixteen Tx BFICs and sixteen Rx BFICs form the beamforming signals (×8)

S403  S403  S403  S403        S403  S403  S403  S403

FIG. 4

FIG. 5

FIG. 6

FIG. 7

FIG. 8

FIG. 9

FIG. 10

FIG. 11

FIG. 12

First layer

Second layer

Third layer

Fourth layer

Fifth layer

120

150

132

135

134

131   160

170

133

110

FIG. 13

FIG. 14

FIG. 15

Ta                                          b

543us

200us

MCU1

Communication
control time
between MCU1
and MCU2

MCU2

747us

FIG. 16

Europäisches
Patentamt

European
Patent Office

Office européen
des brevets

## EUROPEAN SEARCH REPORT

**Application Number**

EP 25 16 0649

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/235282 A2 (BRECHKO PAVEL [US]; CORMAN DAVID W [US] ET AL.) 29 July 2021 (2021-07-29) * paragraphs [0077] - [0079], [0092]; figures 3A,3B,5,8B * | 1-13 | INV. H04B1/04 H01Q3/26 H04B1/18 H04B7/06 H04B7/08 |
| X | EP 3 726 242 A2 (INFINEON TECHNOLOGIES AG [DE]) 21 October 2020 (2020-10-21) * columns 31,44,58; figures 1,3A * | 1-13 | |
| X | EP 4 287 514 A1 (NXP BV [NL]) 6 December 2023 (2023-12-06) * paragraphs [0013], [0033]; figures 1,2 * | 1-13 | |
| X | US 10 720 985 B1 (KANAR TUMAY [US] ET AL) 21 July 2020 (2020-07-21) * column 3, line 54 - column 4, line 16; figures 1,3 * | 1-13 | |

**TECHNICAL FIELDS SEARCHED (IPC)**

H04B
H01Q

The present search report has been drawn up for all claims

| Place of search | Date of completion of the search | Examiner |
|---|---|---|
| Munich | 3 July 2025 | Marques, Gabriela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0649

This annex lists the patent family members relating to the patent documents cited in  the above-mentioned European search report.
The members are as contained in the European Patent Office EDP file on
The European Patent Office is in no way liable for these particulars which are merely given for the purpose of information.

03-07-2025

| Patent document cited in search report | | Publication date | Patent family member(s) | | Publication date |
|---|---|---|---|---|---|
| US 2021235282 | A2 | 29-07-2021 | US | 2019274055 A1 | 05-09-2019 |
| | | | WO | 2019126826 A1 | 27-06-2019 |
| EP 3726242 | A2 | 21-10-2020 | CN | 111800173 A | 20-10-2020 |
| | | | EP | 3726242 A2 | 21-10-2020 |
| | | | US | 2020319327 A1 | 08-10-2020 |
| EP 4287514 | A1 | 06-12-2023 | CN | 117155435 A | 01-12-2023 |
| | | | EP | 4287514 A1 | 06-12-2023 |
| | | | US | 2023387985 A1 | 30-11-2023 |
| US 10720985 | B1 | 21-07-2020 | NONE | | |

EPO FORM P0459

For more details about this annex : see Official Journal of the European Patent Office, No. 12/82